(19) Europäisches Patentamt
European Patent Office
Office européen des brevets

(11) Publication number: **0 574 705 A1**

# (12) EUROPEAN PATENT APPLICATION

(21) Application number: **93107829.9**

(51) Int. Cl.$^5$: **B01D 53/08**, B01D 53/34

(22) Date of filing: **13.05.93**

(30) Priority: **15.06.92 JP 178906/92**

(43) Date of publication of application:
**22.12.93 Bulletin 93/51**

(84) Designated Contracting States:
**DE NL SE**

(71) Applicant: **SUMITOMO HEAVY INDUSTRIES, LTD**
**2-1 Ohtemachi 2-chome**
**Chiyoda-ku**
**Tokyo 100(JP)**

(72) Inventor: **Watanabe, Teruo**
**23-4, Kariyacho-5-chome**
**Ushiku-shi(JP)**
Inventor: **Yamamoto, Kazuhiko**
**3-12, Kamishirane-2-chome,**
**Asahi-ku**
**Yokohama-shi(JP)**
Inventor: **Tanaka, Tateo**
**29-7, Soshigaya-1-chome,**
**Setagaya-ku**
**Tokyo(JP)**

(74) Representative: **Henkel, Feiler, Hänzel & Partner**
**Möhlstrasse 37**
**D-81675 München (DE)**

## (54) Process for removing dioxins.

(57) Dioxins are economically and efficiently removed from a flue gas from incinerators, etc. with activated carbon or activated cokes by passing a flue gas containing dioxins at 90° to 120°C through a cross-flow type, moving bed adsorber, thereby removing the dioxins therefrom, regenerating the dioxins-adsorbed activated carbon or activated cokes and recyclically using the regenerated activated carbon or activated cokes in the adsorber, where ammonia is injected to the flue gas in a molar ratio of ammonia to $SO_2$ + NOx in the flue gas of 0.1 to 0.5 : 1 before passing the flue gas through the adsorber.

FIG. 1

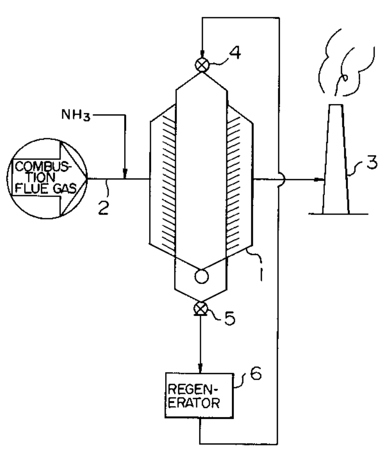


EP 0 574 705 A1

## BACKGROUND OF THE INVENTION

### 1) Field of the Invention

The present invention relates to an improvement in a process for removing dioxins.

### 2) Related Prior Art

Heretofore, dioxins contained in flue gases have been removed simply by adsorbing dioxins onto an adsorbent and combusting the dioxins-adsorbed adsorbent in a combustion furnace, etc. The adsorbent has not been recyclically used owing to the combustion, making the process uneconomical.

Another process for removing dioxins is known, where a calcium compound or powdery activated carbon is sprayed into a flue gas in the flue duct and recovered by a dust collector provided downstream of the spray point, thereby removing the dioxins.

These processes have a low percent removal of dioxins, and discharge the dioxins as such into the environment or combust dioxins-adsorbed, activated carbon powder, thereby decomposing the dioxins, where the adsorbent is not recyclically used to make the processes uneconomical.

Generally, polychlorodibenzoparadioxins (PCDDs) and polychlorodibenzofurans (PCDFs) are called dioxins. Dioxins have the following structural formulae which can each combine up to 8 chlorine atoms:

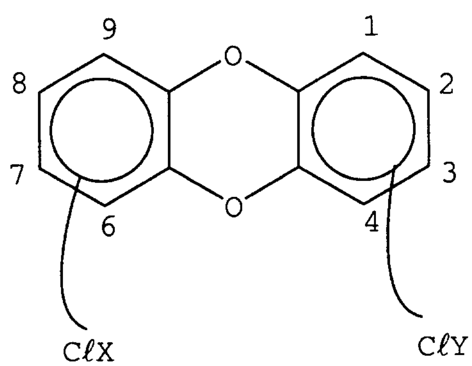

PCDDs

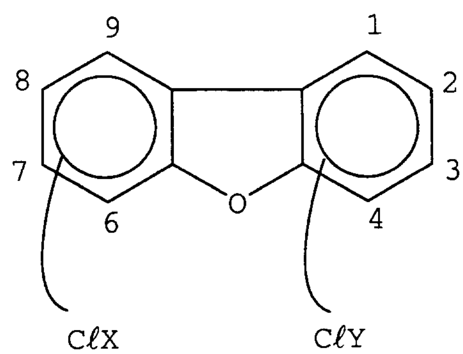

PCDFs

Compounds each with two combining oxygen atoms are called "dioxins" and compounds each with one combining oxygen atom are called "furans".

Many isomers are available, depending on the bonding positions of chlorine atoms, and PCDDs include 75 kinds of isomers and PCDFs include 135 kinds of isomers. Homologs of PCDDs and PCDFs are given in the following Table 1.

Table 1

| Number of chlorine atoms | | PCDDs Molecular formula | PCDDs Number of isomers | PCDFs Molecular formula | PCDFs Number of isomers | Remarks |
|---|---|---|---|---|---|---|
| 1 | [monochloro ($M_1$)] | $C_{12}H_7C\ell O_2$ | 2 | $C_{12}H_7C\ell O$ | 4 | |
| 2 | [dichloro ($D_2$)] | $C_{12}H_6C\ell_2O_2$ | 10 | $C_{12}H_6C\ell_2O$ | 16 | |
| 3 | [trichloro ($T_3$)] | $C_{12}H_5C\ell_3O_2$ | 14 | $C_{12}H_5C\ell_3O$ | 28 | |
| 4 | [tetrachloro ($T_4$)] | $C_{12}H_4C\ell_4O_2$ | 22 | $C_{12}H_4C\ell_4O$ | 38 | TCDD; TCDF |
| 5 | [pentachloro ($P_5$)] | $C_{12}H_3C\ell_5O_2$ | 14 | $C_{12}H_3C\ell_5O$ | 28 | |
| 6 | [hexachloro ($H_6$)] | $C_{12}H_2C\ell_6O_2$ | 10 | $C_{12}H_2C\ell_6O$ | 16 | |
| 7 | [heptachloro ($H_7$)] | $C_{12}H_1C\ell_7O_2$ | 2 | $C_{12}H_1C\ell_7O$ | 4 | HCDF |
| 8 | [octachloro ($O_8$)] | $C_{12}C\ell_8O_2$ | 1 | $C_{12}C\ell_8O$ | 1 | OCDD |

Toxicity differs from one isomer to another, and 17 isomers with chlorine atom(s) at position(s) 2, 3, 7 and/or 8 have a high toxicity. Above all, tetrachlorodibenzylparadioxin (2, 3, 7, 8-TCDD) having 4 combining chlorine atoms at positions 2, 3, 7 and 8 has a very high toxicity.

## SUMMARY OF THE INVENTION

An object of the present invention is to provide a process for economically removing dioxins from flue gases discharged from incinerators, etc. with activated carbon or activated cokes with a high efficiency to overcome the disadvantages of the prior art.

According to the present invention, a flue gas containing dioxins at a temperature of at least 90°C, preferably 90° to 130°C, is passed through a cross-flow type, moving bed adsorber filled with activated carbon or activated cokes, thereby removing dioxins from the flue gas, and the dioxin-adsorbed activated carbon or activated cokes is regenerated by heating and recycled to adsorption in the adsorber, where ammonia is injected into the flue gas before the adsorption through the cross-flow type, moving bed adsorber. An amount of injected ammonia is in a molar ratio of $NH_3$ to $SO_2$ + NOx contained in the flue gas of 0.1 - 0.5 : 1.

## BRIEF DESCRIPTION OF THE DRAWINGS

Fig. 1 is a schematic view of an apparatus for carrying out the present process.

Fig. 2 is a diagram showing relations between the number of chlorine atoms (degree of chlorination) and vapor pressure of dioxins (PCDDs + PCDFs) at 25°C.

## PREFERRED EMBODIMENTS OF THE INVENTION

The present process is carried out in an apparatus shown in Fig. 1.

As shown in Fig. 1, a combustion flue gas containing dioxins (PCDDs + PCDFs) is fed to a cross-flow type, moving bed adsorber 1, whose detail is disclosed in JP-B 62-18209 and JP-B 02-42524, and passed therethrough. In the cross-flow type, moving bed adsorber 1, activated carbon or activated cokes supplied from a supply inlet 4 moves downwards through the adsorber as a moving bed, while conducting the fed combustion flue gas in a cross flow to separate the dioxins contained in the combustion flue gas therefrom through contact with the activated carbon or activated cokes in the moving bed and adsorption onto the activated carbon or activated cokes. The dioxins-free flue gas is discharged from the adsorber 1 through a stack 3 to the outside, whereas the dioxins-adsorbed activated carbon or activated cokes is discharged from the bottom of the adsorber 1 through a discharge outlet 5 to a regenerator 5, where the dioxins-adsorbed activated carbon or activated cokes is regenerated by heating. The regenerated activated carbon or activated cokes is recycled to the adsorber 1 from the supply inlet 4 for reuse in the adsorber 1.

Vapor pressure of dioxins (PCDDs + PCDFs) decreases with increasing number of chlorine atoms (degree of chlorination), as shown in Fig. 2. In other words, dioxins (PCDDs + PCDFs) with less chlorination exist mainly in a vapor state.

Furthermore, it is known that better organic vapor separation can be obtained when the bed of activated carbon or activated cokes, through which organic vapor is passed for adsorptive separation, is at a lower temperature.

When a combustion flue gas having the following composition was treated in the apparatus as shown in Fig. 1 at a temperature of 120°C and a space velocity of 800/hr without injection of ammonia to the flue gas, results of dioxins removal as shown in the following Table 2, was obtained 100 hours after the start of treatment.

| Flue gas composition without $NH_3$ injection | |
|---|---|
| NOx: | 150 ppm |
| $SO_2$: | 175 ppm |
| $NH_3$: | 0 ppm |
| $O_2$: | 16.2% |
| $H_2O$: | 6.0% |
| $N_2$: | balance |
| 2378TCDD: | 2.5 $ng/m^3$ |
| OCDO: | 15 $ng/m^3$ |
| 2378TCDF: | 2.00 $ng/m^3$ |
| 1234678HCDF: | 22 $ng/m^3$ |

Table 2

| Dioxins removal without $NH_3$ injection | | | |
|---|---|---|---|
| | 100 hr after the about of treatment | | |
| | Inlet ($ng/m^3$) | Outlet ($ng/m^3$) | Removal efficiency (%) |
| 2378TCDD | 2.5 | 0.01 | 99.6 |
| OCDD | 15 | 1.2 | 91.7 |
| 2378TCDF | 2.0 | 0.02 | 99.0 |
| 1234678HCDF | 22 | 1.00 | 95.5 |

From the foregoing results, the following relations were obtained:

TCDD $\gg \eta_D \gg$ OCDD
TCDF $\gg \eta_F \gg$ HCDF

In other words, the removal efficiency is lower with more chlorination, i.e. with lower vapor pressure of dioxins (PCDDs + PCDFs), where $\eta_D$ is a removal efficiency of PCDDs and $\eta_F$ is that of PCDFs, as defined by the following equation:

$$\text{Removal efficiency } (\eta) = \left(1 - \frac{\text{Outlet concentration}}{\text{Inlet concentration}}\right) \times 100(\%)$$

Why the removal efficiency is better when the vapor pressure of dioxins is lower is due to the fact that organic vapors are adsorbed more efficiently onto activated carbon or activated cokes at a low vapor concentration as a principle.

$NH_3$ was injected to a flue gas line 2 of a combustion flue gas having the following gas composition under the same conditions as above, i.e. at a temperature of 120 °C and a space velocity of 800/hr, before the treatment in the adsorber. Results of dioxins removal, as shown in the following Table 3, was obtained 100 hours after the start of treatment.

| Flue gas composition with $NH_3$ injection | |
|---|---|
| NOx: | 150 ppm |
| $SO_2$: | 175 ppm |
| $NH_3$: | 100 ppm |
| $O_2$: | 16.2% |
| $H_2O$: | 6.0% |
| $N_2$: | balance |
| 2378TCDD: | 0.15 $ng/m^3$ |
| OCDD: | 14 $ng/m^3$ |
| 2378TCDF: | 2.2 $ng/cm^3$ |
| 1234678HCDF: | 23 $ng/m^3$ |

Table 3

| Dioxins removal with $NH_3$ Injection | | | |
|---|---|---|---|
| | 100 hr after the start of treatment | | |
| | Inlet (ng/m$^3$) | Outlet (ng/m$^3$) | Removal efficiency (%) |
| 2378TCDD | 0.15 | <0.005 | >96.6 |
| OCDD | 14 | 0.18 | 98.7 |
| 2378TCDF | 2.2 | <0.005 | >99.8 |
| 1234678HCDF | 23 | 0.064 | 99.7 |

That is, as is apparent from Table 3, a removal efficiency of about 99.5 to about 99.9% could be obtained without any influence of vapor pressures as observed in Table 2. That is, removal of dioxins (PCDDs + PCDFs) without $NH_3$ injection is based on physical adsorption, whereas that of dioxins with $NH_3$ injection is based on adsorption of ammonium salts and it seems that the adsorption efficiency, i.e. removal efficiency, is stabilized and improved.

In the present invention, a combustion flue gas containing dioxins (PCDDs + PCDFs) was passed through a cross-flow type, moving bed adsorber 1, filled with activated carbon or activated cokes to remove dioxins from the flue gas through contact with the activated carbon or activated cokes by adsorption onto the activated carbon or activated cokes, and the dioxins-adsorbed activated carbon or activated cokes was regenerated by heating and recyclically used in the adsorber 1. Ammonia was injected at the flue gas line 2 before the adsorber 1 in a molar ratio of $NH_3$ to $SO_2$ + NOx in the flue gas of 0.1 to 0.5 : 1, i.e. to $SO_2$ + NO in a much larger amount than that of dioxins in the flue gas. Stable, highly efficient adsorption of dioxins was obtained, as compared with that without $NH_3$ injection.

That is, without $NH_3$ addition, the percent removal largely fluctuates, dependent on the species of dioxins, as shown in Table 2. Thus, it is necessary to add $NH_3$ to the flue gas. When a larger amount of $NH_3$ than 0.5 : 1 in the molar ratio is used, excess $NH_3$ is adsorbed on the adsorber, and when such excess $NH_3$ is released from the adsorbent by desorption, such an excess amount of $NH_3$ is involved in a desorption gas including $SO_2$, etc. and contained at a high concentration without decomposition of $NH_3$. That is, a $NH_3$ concentration of the desorption gas is drastically increased in a molar ratio of 0.5 to 0.6 : 1.

Further effect of $NH_3$ addition is an improvement of the activity of adsorbent, for example, activated carbon. That is, the effect is remarkable up to a molar ratio of 0.5 : 1.

In the present invention, dioxins (PCDDs + PCDFs) can be removed by adsorption at a higher temperature, i.e. 90° to 130°C, than the conventional adsorption temperature, without any special pretreatment, such as cooling and washing. When the flue gas is at a temperature below 90°, corrosion of the apparatus is more liable to take place, whereas above 130°C, superheating of adsorbent (drastic elevation of temperature of adsorbent) is liable to take place, particularly when the flue gas has an oxygen concentration of about 16% by volume, as applied in the present invention. That is, dioxins can be economically and efficiently removed from flue gases from incinerators, etc. with activated carbon or activated cokes.

## Claims

**1.** A process for removing dioxins, which comprises passing a flue gas containing dioxins at a temperature of at least 90° through a cross-flow type, moving bed adsorber filled with activated carbon or activated cokes, thereby removing the dioxins from the flue gas through adsorption onto the activated carbon or activated cokes, regenerating the dioxins-adsorbed activated carbon or cokes by heating and recyclically using the regenerated activated carbon or cokes in the adsorber.

**2.** A process according to Claim 1, wherein ammonia is injected to the flue gas before passing the flue gas through the adsorber.

**3.** A process according to Claim 1, wherein the ammonia is injected in a molar ratio of ammonia to SO2 + NOx contained in the flue gas of 0.1 to 0.5 : 1.

**4.** A process according to Claim 1, wherein the termperature is 90° to 130°C.

FIG. 1

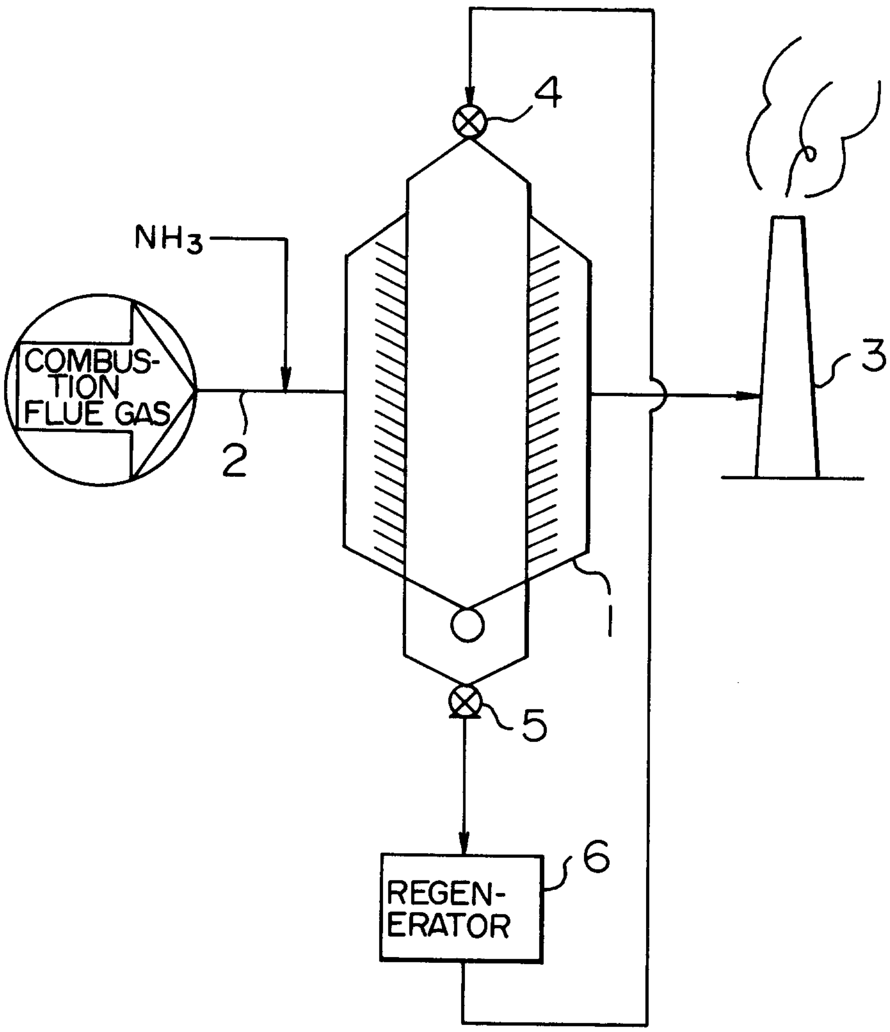

FIG. 2

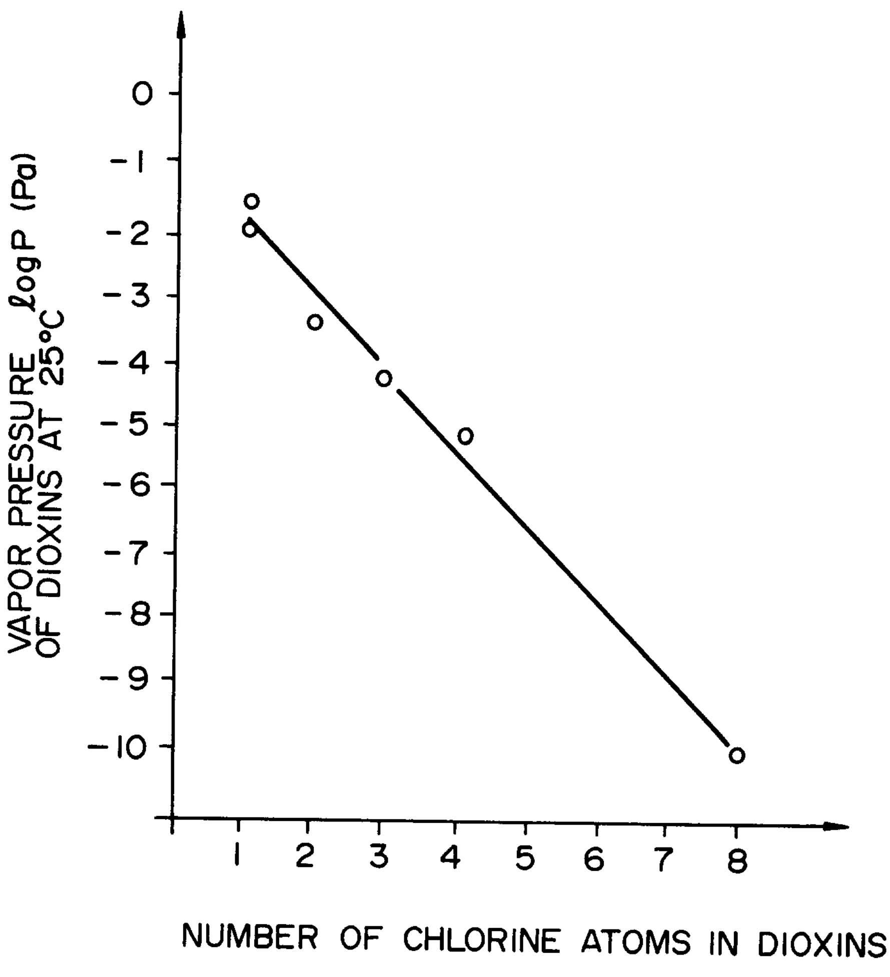
VAPOR PRESSURE logP (Pa)
OF DIOXINS AT 25°C
0
-1
-2
-3
-4
-5
-6
-7
-8
-9
-10
1
2
3
4
5
6
7
8
NUMBER OF CHLORINE ATOMS IN DIOXINS

European Patent Office

# EUROPEAN SEARCH REPORT

Application Number

EP 93 10 7829

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | PATENT ABSTRACTS OF JAPAN vol. 017, no. 073 (C-1026)15 February 1993 & JP-A-42 77 005 ( SUMITOMO HEAVY IND LTD ) 2 October 1992 * abstract * | 1,2 | B01D53/08 B01D53/34 |
| P,A | EP-A-0 501 281 (EBARA CORPORATION) 2 September 1992 * column 2, line 9 - column 3, line 28 * | 1,2 | |
| A | DE-A-3 619 496 (SUMITOMO HEAVY IND LTD) * claims 1,2; figures 1-3 * | 1-4 | |
| A | EP-A-0 479 286 (LINDE AG) * claims 1,3,6 * | 1 | |
| A | EP-A-0 479 350 (METALLGESELLSCHAFT AG) * claims 1-3 * | 1 | |
| A | WO-A-9 200 136 (OCCIDENTAL CHEMICAL CORP) * page 3, paragraph 1; claims 1-9 * | 1,2 | TECHNICAL FIELDS SEARCHED (Int. Cl.5 ) B01D A62D B01J |

The present search report has been drawn up for all claims

| Place of search | Date of completion of the search | Examiner |
|---|---|---|
| THE HAGUE | 30 SEPTEMBER 1993 | EIJKENBOOM T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)